(19) Europäisches Patentamt

European Patent Office

Office européen des brevets

(11) EP 0 631 443 B1

(12) FASCICULE DE BREVET EUROPEEN

(45) Date de publication et mention
de la délivrance du brevet:
13.01.1999 Bulletin 1999/02

(51) Int Cl.⁶: **H04N 7/30**

(21) Numéro de dépôt: 94401393.7

(22) Date de dépôt: 22.06.1994

(54) **Dispositif pour la transmission d'images relevées par un satellite**

Vorrichtung zur Übertragung von von einem Satelliten gesammelten Bildern

Device for the transmission of images collected by a satellite

(84) Etats contractants désignés:
AT BE CH DE DK ES FR GB GR IE IT LI LU MC NL
PT SE

(30) Priorité: 22.06.1993 FR 9307537

(43) Date de publication de la demande:
28.12.1994 Bulletin 1994/52

(73) Titulaire: CENTRE NATIONAL D'ETUDES
SPATIALES
75001 Paris (FR)

(72) Inventeur: Moury, Gilles
F-31500 Toulouse (FR)

(74) Mandataire: Martin, Jean-Jacques et al
Cabinet REGIMBEAU
26, Avenue Kléber
75116 Paris (FR)

(56) Documents cités:
EP-A- 0 243 923          EP-A- 0 444 918
EP-A- 0 478 230          EP-A- 0 498 656
EP-A- 0 514 663          EP-A- 0 540 961
US-A- 5 144 426

• PATENT ABSTRACTS OF JAPAN vol. 8, no. 161
(E-257) 26 Juillet 1984 & JP-A-59 061 288 (FUJI
SHASHIN FILM KK) 7 Avril 1984
• IEEE TRANSACTIONS ON COMMUNICATIONS,
vol.34, no.8, 1 Août 1986, NEW YORK, USA pages
840 - 847 J.D. EGGERTON ET AL. 'A Visually
weighted Quantization Scheme for Image
Bandwidth Compression at Low Data Rates'
• PATENT ABSTRACTS OF JAPAN vol. 17, no. 115
(E-1330) 10 Mars 1993 & JP-A-04 297 184
(TOSHIBA CORP.) 21 Octobre 1992
• SIGNAL PROCESSING: IMAGE
COMMUNICATION, vol.4, no.6, 1 Novembre
1992, ELSEVIER, AMSTERDAM, NL pages 477 -
488, XP322089 F. BELLIFEMINE ET AL.
'Statistical Analysis of the 2D-DCT Coefficients
of the Differential Signal for Images'
• PATENT ABSTRACTS OF JAPAN vol. 8, no. 161
(E-257) 26 Juillet 1984 & JP-A-59 061 279 (FUJI
SHASHIN FILM KK) 7 Avril 1984
• PATENT ABSTRACTS OF JAPAN vol. 13, no. 109
(E-727) 15 Mars 1989 & JP-A-63 279 686
(MITSUBISHI ELECTRIC CORP.) 16 Novembre
1988
• PATENT ABSTRACTS OF JAPAN vol. 16, no. 174
(E-1195) 27 Avril 1992 & JP-A-04 018 857 (RICOH
CO. LTD.) 23 Janvier 1992

## Description

La présente invention est relative à un dispositif pour la transmission d'images relevées par un satellite d'observation.

Classiquement, les dispositifs de transmission d'images relevées par un satellite mettent en oeuvre des techniques de compression d'images.

On distingue dans les techniques de compression d'images les techniques de compression à débit variable et les techniques de compression à débit fixe.

Dans les deux cas, les images sont traitées successivement par un module de décorrélation, puis par un quantificateur.

Le module de décorrélation de l'image permet de réduire la redondance contenue dans les données. En effet, dans une image, la valeur d'un pixel est fortement corrélée à celle de ses voisins. En pratique, il existe un grand nombre de méthodes, plus ou moins locales, pour décorréler les pixels incidents. La plus simple, et la plus locale, est de remplacer la valeur du pixel p(i,j) par la différence avec le pixel voisin [p(1,j)-p(1,j-1)].

Les données obtenues à l'issue de cette phase de décorrélation sont souvent telles que, même si leur nombre n'a pas augmenté, elles doivent être manipulées avec une dynamique supérieure à celle des pixels source, si l'on désire retrouver l'image sans aucune dégradation par traitement inverse (compression réversible). A l'issue de cette première phase, le processus de compression n'a donc pas encore effectivement commencé, mais les données ont été décorrélées pour que le traitement ultérieur (quantification et codage) soit optimal.

Le quantificateur est l'organe essentiel du dispositif de compression. En effet, c'est lui qui va diminuer effectivement la quantité d'information transmise en éliminant toute l'information non pertinente, vis-à-vis de l'utilisation qui est faite des images après décompression au sol.

Dans le cas d'une compression à débit fixe, les lois de quantification qui sont utilisées sont non uniformes et adaptées à la statistique des données décorrélées, de façon à minimiser, pour un taux de compression fixé, l'erreur entre l'image source et l'image après compression/décompression.

Dans le cas des techniques de compression à débit variable, les lois de quantification qui sont utilisées sont uniformes. Les valeurs quantifiées sont traitées par un module de codage qui a pour rôle de produire un train binaire le plus compact possible.

Le principe des codes à longueur variable est simple : affecter les codes les plus courts aux valeurs quantifiées les plus probables. Ce type de codage est appelé "codage entropique" car il tire parti de l'entropie (paramètre dont la définition est rappelée plus loin dans le présent texte) réduite des données après décorrélation et quantification. Le défaut des codeurs à longueur variable (ou entropiques) est qu'ils produisent un débit dynamiquement variable en fonction de l'entropie locale de l'image à traiter. Par exemple, des zones quasi-uniformes (mer, champ labouré, ...) de l'image produiront très peu de bits par pixel alors que des zones très actives (ville) en produiront beaucoup.

Il est apparu que qualitativement et quantitativement, les techniques de compression à débit variable étaient beaucoup plus performantes que les techniques de compression à débit fixe, et ce quel que soit le type d'image traitée.

Notamment, alors que jusqu'à présent, seules les techniques de compression à débit fixe étaient utilisées pour le traitement d'images relevées par des satellites d'observation, pour les satellites de la nouvelle génération, on s'oriente, compte tenu de l'augmentation de la résolution des imageurs, vers les techniques de compression à débit variable.

Néanmoins, la mise en oeuvre de ces techniques s'est heurtée, à ce jour, à certaines difficultés.

Si dans les techniques de compression à débit fixe, le débit en sortie de l'unité de compression est divisé dans le rapport du taux de compression par rapport au débit d'entrée, dans les techniques à débit variable, le débit instantané en sortie de l'unité de compression peut être ponctuellement égal au débit d'entrée. Ceci correspond par exemple à des zones de l'image où l'activité (en terme de contenu spectral et de transitions radiométriques) est tellement élevée que l'unité de compression produit autant, voire même plus de bits qu'il n'y en a dans l'image source.

Pour ne pas perdre d'informations, on est donc conduit, dans la chaîne de transmission recevant les données en sortie de l'unité de compression, à échantillonner ces données à une fréquence correspondant à la fréquence de la source d'entrée. Sur une suite de bits de données transmises, statistiquement seul un bit tous les T bits (ou T est le taux de compression moyen) sera porteur d'information, les autres bits étant des bits de bourrage.

Sur un satellite, une même chaîne de transmission traite simultanément plusieurs images relevées par différents imageurs. Les éléments qui composent cette chaîne et qui se trouvent en aval des différentes unités de compression doivent être dimensionnés pour pouvoir traiter un débit total égal à la somme des débits que leur envoient les unités de compression.

Dans le cadre d'imageurs haute résolution, ceci dépasse largement les possibilités technologiques actuelles, ce d'autant qu'on constate en pratique que les techniques de compression d'images à débit variable ne permettent pas de prévoir, pour une programmation opérationnelle donnée, la taille des images à mieux que ± 30 %. Pour éviter tout risque de débordement ou de saturation des éléments de la chaîne de transmission qui se trouvent en aval des unités de compression, on est amené à dimensionner ces éléments avec une marge d'environ 30 %. La performance globale du dispositif est alors proche de celle obtenue avec des techniques de compression à débit fixe.

Pour pallier ces problèmes, il a déjà été proposé de disposer en sortie de l'unité de compression une mémoire de lissage de type First In-First Out (FIFO) dont le débit de sortie $H_2$ est fixe et est égal, par rapport au débit $H_1$ de la source d'images, à $H_2 = H_1/K$ ou K est un paramètre compris entre 1 et un taux de compression moyen escompté T.

Cette mémoire FIFO réalise ainsi un lissage passif en boucle ouverte qui amortit les fluctuations des taux de compression sur l'image.

Le débit d'échantillonnage des données en sortie du compresseur est réduit dans un rapport K.

Néanmoins, un tel dispositif présente les désavantages suivants :

- pas de maîtrise de la taille des images après compression puisque l'algorithme fonctionne en boucle ouverte ;
- taille de la mémoire FIFO de lissage de plusieurs centaines de Mbits ;
- risque de débordement de la mémoire FIFO (et donc perte d'une partie de la prise de vue) difficilement quantifiable ;
- le taux de compression moyen escompté doit être choisi avec une certaine marge.

Un tel lissage répond donc partiellement aux problèmes du débit en sortie du compresseur mais ne résout aucunement les problèmes de dimensionnement des ressources en aval du compresseur.

Il a également été proposé de compléter cette mémoire FIFO par une unité de régulation qui reçoit de ladite mémoire FIFO une information relative à son taux de remplissage et calcule un paramètre F par lequel elle commande le quantificateur de façon à adapter le taux de compression au taux de remplissage de la mémoire FIFO.

La taille de la mémoire FIFO peut ainsi être notablement réduite, sans risque de débordement et donc de perte de partie de prise de vue.

Néanmoins, on constate en pratique que les images restituées sont de qualité très inhomogène.

Ceci est dû à des fluctuations plus ou moins erratiques du paramètre F de réglage du taux de compression, et en particulier à des ajustements intempestifs de ce paramètre F qui sont en opposition de phase par rapport au contenu local de l'image à comprimer.

Un but principal de l'invention est donc de proposer un dispositif de traitement d'images :

- dont le débit de sortie est fixe et réduit par rapport au débit de données binaires qu'il reçoit dans le rapport du taux de compression demandé par l'utilisateur,
- qui permet une qualité d'images restituées homogène, notamment le long de la trace de satellite, sans risque de saturation ou débordement des éléments qui la constituent.

On connaît déjà par la demande EP-444 918, pour des applications à la mémorisation d'images en vue de leur traitement informatique, des techniques de compression d'image dans lesquelles le pas de quantification est asservi au taux de remplissage d'une mémoire de sortie, en fonction d'une pré-analyse des images avant compression.

On connaît en outre par les demandes EP-514 663 et EP-540 961, également pour des applications à la mémorisation d'images vidéo en vue de leur traitement informatique, des techniques de compression mettant en oeuvre un codage fonction du taux de remplissage de la mémoire de sortie.

L'invention propose quant à elle une structure particulièrement adaptée à la transmission d'images relevées par des satellites d'observation.

Le dispositif proposé par l'invention est un dispositif pour la transmission d'images relevées par un satellite comportant des moyens pour l'émission de données binaires vers une station de réception sur la terre et des moyens de traitement auxquels au moins un imageur du satellite transmet des lignes de blocs qui sont des valeurs binaires représentatives des pixels d'un nombre entier de lignes consécutives de fauchée de l'instrument de prise de vue, ces moyens de traitement recevant ces données à débit de données binaires fixe et transmettant en sortie aux moyens d'émission des données binaires avec un débit fixe inférieur au débit en entrée des moyens de traitement, ces moyens de traitement comportant une unité de compression qui comprend :

- un module de décorrélation ;
- un quantificateur qui reçoit du module de décorrélation des données décorrélées et qui les quantifie en fonction d'un paramètre de réglage du taux de compression ;
- un module de codage qui reçoit du quantificateur des données quantifiées et qui code ces données, selon un code de longueur variable ;

les moyens de traitement comportant également :

- une mémoire de type FIFO recevant du module de codage des données codées, ladite mémoire étant reliée en sortie aux moyens d'émission ;

- des moyens de régulation qui reçoivent de la mémoire FIFO une information sur son taux de remplissage et qui déterminent, en fonction de ce taux de remplissage, un paramètre de réglage de taux de compression, pour le quantificateur ;

caractérisé en ce que lesdits moyens de traitement comportent également des moyens de pré-analyse des images transmises à l'unité de compression, ces moyens de pré-analyse comportant des moyens pour déterminer, pour une ligne de blocs à traiter, un paramètre estimateur de la quantité d'informations contenue dans cette ligne de blocs, ce paramètre estimateur étant transmis aux moyens de régulation,
lesdits moyens de régulation comportant des moyens mémoire dans lesquels sont mémorisées :

- d'une part, une loi de retour à l'équilibre par laquelle ils déterminent, en fonction du taux de remplissage de la mémoire FIFO, un nombre de bits souhaité après compression pour la ligne de blocs traitée, et
- d'autre part, des données permettant d'associer un paramètre de réglage de taux de compression optimal à un couple de valeurs de paramètre estimateur et d'un nombre estimé de bits produits après compression,

les moyens de régulation déterminant à partir de ces données, et en fonction, d'une part, d'un nombre de bits souhaité après compression déterminé à l'aide de la loi de retour à l'équilibre et, d'autre part, du paramètre estimateur, un paramètre de réglage de taux de compression optimal,
ce nombre de bits souhaité étant préalablement corrigé par un biais qui est une valeur moyenne des différences entre le nombre de bits souhaité déterminé pour des lignes de blocs précédemment traitées et le nombre de bits effectif occupé dans la mémoire FIFO après traitement de ces lignes de blocs.

La régulation que permet un tel dispositif de transmission est particulièrement adaptée à la transmission d'images temps réel relevées par un satellite d'observation de la terre. La fauchée que réalisent les imageurs sur un satellite d'observation de la terre est en général très large : typiquement 3000 à 12000 pixels par ligne (de l'ordre de 60 km de large au sol). Une ligne de blocs ( en général, huit lignes consécutives de fauchée) contient donc une grande variété de paysages différents.

De ce fait, il est particulièrement avantageux d'utiliser les lignes de blocs comme support de régulation de débit : ceci permet de compenser les zones de lignes de blocs faciles à coder (car peu complexes) et les zones difficiles à coder (car très complexes).

L'invention permet par conséquent de ne pas avoir à effectuer les transferts de bits dans la hauteur de l'image, ce qui serait très pénalisant en terme de capacité mémoire à implanter dans le dispositif de compression.

Egalement, du fait de la largeur de la fauchée, le biais calculé se maintient sensiblement constant d'une ligne de blocs à l'autre. On a constaté par simulation que sur des lignes de blocs consécutives, le biais oscille peu et reste stable dans le temps.

Conformément à un mode de réalisation avantageux de l'invention, les données mémorisées dans les moyens de régulation comportent un réseau de relations linéaires entre le paramètre estimateur et le nombre estimé de bits produits après compression, à paramètre de réglage de taux de compression donné.

Un tel réseau de droites moyennes, complété par la correction de biais, s'avère particulièrement efficace pour le traitement des lignes de blocs.

On constate statistiquement que le couple estimateur/nombre de bits effectif occupé dans la mémoire FIFO après traitement est, pour des lignes de blocs consécutives, soit au-dessus, soit en dessous des droites moyennes, sans que l'on oscille d'une ligne de blocs à la suivante d'un point nettement au-dessus à un point nettement en dessous.

Le biais est donc stable dans le temps et donc efficace.

En outre, les pentes des nuages de points qui sont en dessous ou au-dessus d'une droite moyenne sont très proches de la pente de ladite droite. Le biais reste donc pertinent, même si l'estimateur varie rapidement d'une ligne de blocs à la suivante.

Du fait des performances de la régulation que permet le dispositif de transmission conforme à l'invention, la mémoire FIFO de sortie est d'une capacité raisonnable. A titre d'exemple, dans le cas d'un satellite d'observation sur lequel on souhaite pouvoir comprimer les images relevées par un imageur, la capacité nécessaire de cette mémoire FIFO est égale à la taile de six lignes de blocs comprimées. On obtient donc, pour une largeur de fauchée de 12000 pixels, pour un taux de compression de 3, pour des pixels codés en entrée du dispositif de compression sur 8 bits et pour un ligne de blocs de huit lignes, une taille de mémoire FIFO égale à :

$$6 \text{ x } 12000 \text{ x } 8 \text{ lignes x } 8 \text{ bits } / 3 = 1,5 \text{ Mbits.}$$

la largeur de la fauchée étant de 12000 pixels et le taux de compression de 3.

Ainsi, les moyens proposés par l'invention permettent de tirer parti de la performance des procédés de codage à longueur variable, et ce avec un surcoût très limité en terme de ressources supplémentaires embarquées sur le satellite.

D'autres caractéristiques et avantages de l'invention ressortiront encore de la description qui suit d'un mode de réalisation particulier du dispositif selon l'invention.

Cette description doit être lue en regard des dessins annexés sur lesquels :

- la figure 1 représente schématiquement par blocs le dispositif de compression selon un mode de réalisation particulièrement avantageux de l'invention ;
- la figure 2 représente schématiquement une courbe de statistiques de résidus de prédiction en sortie du décorrélateur ;
- les figures 3 et 4 représentent schématiquement des graphes sur lesquels sont portés des réseaux de droites moyennes en fonction du facteur F de réglage du taux de compression (nombre de bits moyens par ligne de blocs en fonction du paramètre estimateur de la quantité d'informations) ;
- la figure 5 est un graphe illustrant la régulation du taux de remplissage de la mémoire FIFO ;
- la figure 6 illustre schématiquement le séquencement global des opérations dans le dispositif de la figure 1 ;
- la figure 7 illustre une chaîne de transmission d'images comforme à l'invention.

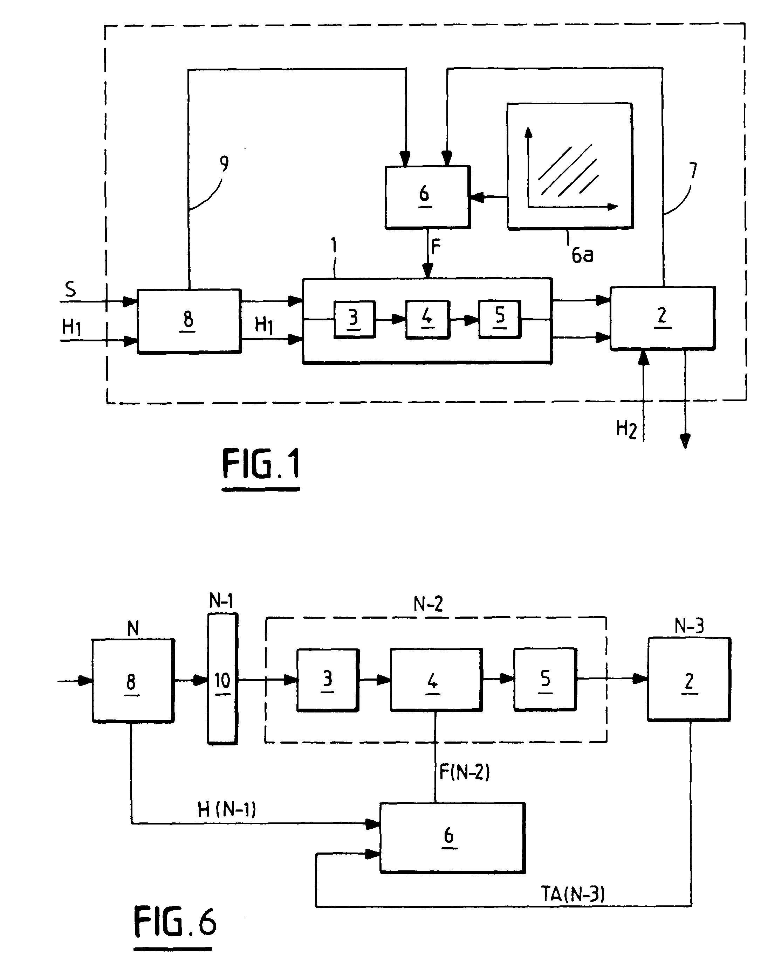

Le disposif qui a été représenté schématiquement sur la figure 1 comporte principalement une unité de compression 1 et une mémoire FIFO 2 (First In First Out) qui reçoit les données comprimées par l'unité de compression 1.

Cette unité de compression 1 est du type à débit variable. Elle comporte une unité de décorrélation 3, un quantificateur 4 et une unité de codage 5.

Un exemple de décorrélation possible pour l'unité 3 est ici illustré.

soit une ligne image :

| rang de pixels | 0 X X 0 X X, etc. |
|---|---|
| valeurs de pixels | A B C D, etc. |

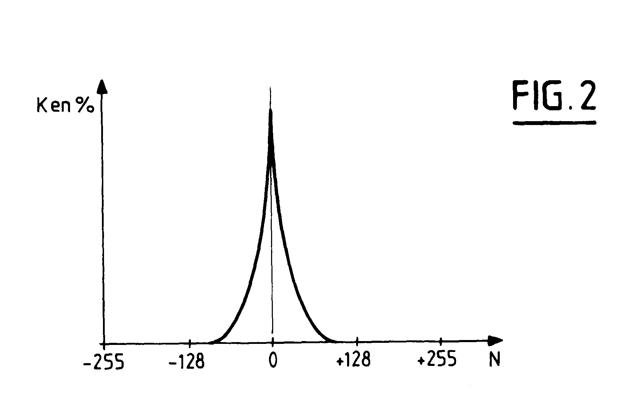

Les pixels de rang 3N+1 (représentés par des 0) sont transmis tels quels (pixels de référence). Pour les autres pixels (représentés par des X), on calcule la différence entre la valeur du pixel et la prédiction. La prédiction pour les pixels B et C (notée PB, PC) est égale à : partie entière (A/2) + partie entière (D/2). En sortie du décorrélateur, on trouve les valeurs : A, B-PB, C-PC, D, ...... Seuls sont quantifiés les résidus de prédiction (B-PB, C-PC, .....). La statistique des résidus de prédiction est du type Laplacienne. Elle a été représentée sur le diagramme de la figure 2, sur lequel on a porté le pourcentage de résidus de prédiction en fonction de la valeur N ( la statistique suit approximativement la Loi de Laplace suivante : $K(N) = (a/2)e^{-aN}$ , où a est une constante).

Le résidu de prédiction est ensuite quantifié linéairement à l'aide d'un facteur de quantification F. Ce facteur de quantification F joue le rôle de paramètre de réglage du taux de compression. Cette quantification est réalisée dans l'unité de quantification 4.

L'unité de codage 5 réalise par exemple un codage de type Rice. Les données quantifiées sont codées de la façon suivante :

| valeur | code |
|---|---|
| 0 | 1 |
| 1 | 01 |
| -1 | 001 |
| 2 | 0001 |
| -2 | 00001 |
| 3 | 000001 |
| -3 | 0000001 |
| etc. | |

On peut montrer que ce code (bien que très simple dans son principe et pour le décodage au sol) est un code optimal pour a > 0,481 (a = paramètre de la distribution Laplacienne des valeurs quantifiées). En pratique, on utilise un codage de Rice à 8 options, chaque option correspondant à un nombre différent de bits de poids faible transmis en clair. Les pixels sont regroupés en bloc (par exemple de 16), tous les pixels d'un même bloc étant codés avec la même option. La taille d'un bloc après codage varie grandement avec le contenu de ce bloc.

Dans une variante particulièrement avantageuse, l'unité 1 met en oeuvre un algorithme de décorrélation de type DCT (Discrete Cosine Transform).

La quantification est linéaire et fonction d'un facteur de quantification F par lequel on divise tous les coefficients spectraux issus de l'algorithme de décorrélation, F pouvant varier de 1 à 255.

L'unité 5 code les coefficients DC représentant les composantes continues des données comprimées en DPCM (Differential Pulse Coded Modulation) et codage entropique du type Length et valeur (codage à longueur variable du nombre de bits nécessaire pour coder le coefficient).

Les autres coefficients (coefficients AC) sont codés avec une table de code Run-Length.

La mémoire FIFO 2 a une capacité de l'ordre de 1 à 2 Mbits. Cette mémoire FIFO 2 reçoit les données comprimées, à un débit qui est variable en fonction des pixels traités. Elle est commandée par une horloge H2 qui lui impose un débit $H_2$ de sortie fixe.

Si H1 est le débit fixe auquel les données sont transmises à l'entrée de l'unité de compression 1 par une source d'images S, H2 est tel que H2 = H1/T, où T est le taux de compression moyen recherché.

Le facteur de quantification F est calculé par une unité de régulation 6 qui reçoit de la mémoire FIFO 2 des informations sur le taux de remplissage de la mémoire FIFO (flèche 7). Une unité de pré-analyse 8 est disposée en amont de l'unité de compression 1. Elle fournit à l'unité 6 des informations sur les données qui seront comprimées par l'unité 1 (flèche 9).

En particulier, l'unité 8 réalise sur chaque ligne de blocs entrant dans le compresseur 1 une pré-analyse qui calcule un paramètre estimateur de la quantité d'informations contenue dans cette ligne de blocs (si l'on utilise un décorrélateur de type DCT, le bloc a pour taille 8 x 8 pixels, une ligne de blocs est donc, dans le cas, constituée par 8 lignes image consécutives). Cet estimateur est utilisé pour prédire la quantité de bits produite par cette ligne de blocs après compression.

A titre d'exemple, un tel estimateur peut être choisi comme étant l'entropie des différences entre pixels adjacents sur la même ligne, cette entropie se calculant par la formule

$$H = \sum_{i=-255}^{i=+255} p_i \log_2 \frac{1}{p_i} \quad ,$$

où $P_i$ est la probabilité que la différence entre pixels adjacents sur une même ligne prenne la valeur i.

Un autre estimateur simplifié (homogène à l'écart-type de la distribution des différences) est encore donné par la formule

$$\sigma = \sum_{i=1}^{8} \sum_{j=2}^{L} |p_{i,j} - p_{i,j-1}|$$

où les coefficients $P_{i,j}$ sont les valeurs des pixels de l'image source (i = indice de ligne, j = indice de colonne, L = largeur en nombre de pixels de la fauchée instrument).

Cet estimateur est plus simple à calculer que l'entropie et donne également de bons résultats.

A l'aide de cet estimateur (flèche 9) et du taux de remplissage de la mémoire FIFO 2 (flèche 7), l'unité de régulation 6 détermine le facteur F optimal.

A cet effet, afin de prévoir au mieux le nombre de bits produit par la ligne de blocs après compression pour divers facteurs F de quantification possibles, on bâtit un réseau de droites moyennes (une droite par facteur F) permettant de relier la valeur de l'estimateur pour la ligne de blocs considérée avec le nombre de bits produit après compression. Ce réseau de droites est stocké dans des moyens mémoire 6a des moyens de régulation 6.

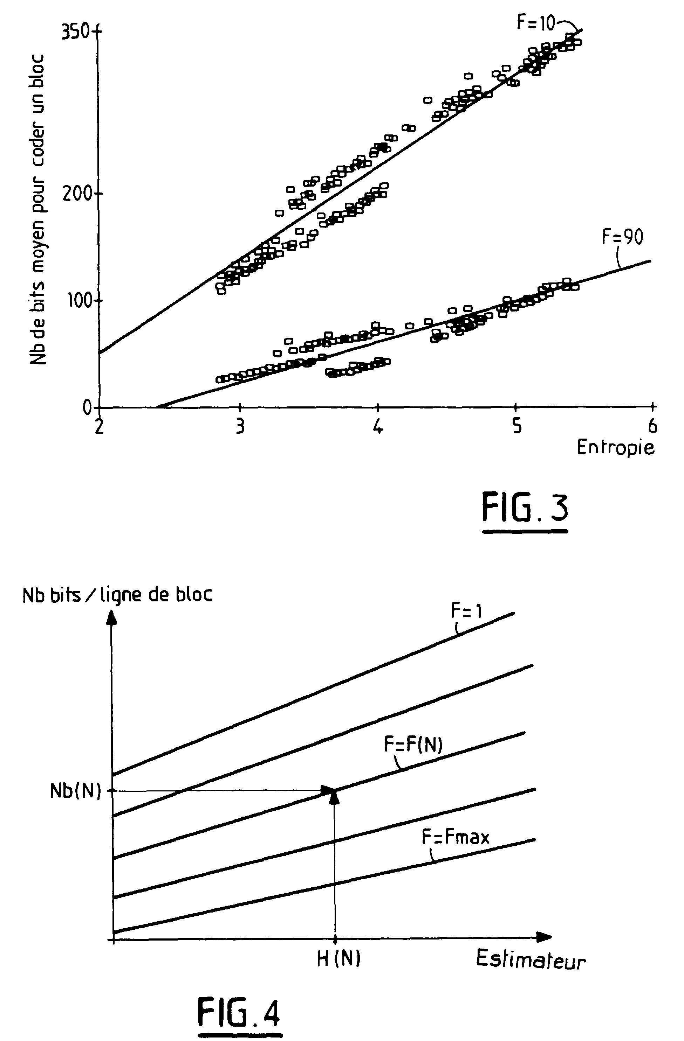

On obtient ces droites moyennes en réalisant les simulations sur un grand nombre d'images et donc un grand nombre de lignes de blocs. Les nuages de points obtenus ont l'allure typique représentée sur la figure 3.

Par régression linéaire, il est possible d'obtenir une droite moyenne par facteur. Ce réseau de droites a alors l'allure représentée sur la figure 4.

On remarque que ces droites sont sensiblement parallèles et que plus les facteurs sont élevés et plus les droites sont proches.

Pour simplifier le calcul réalisé par l'unité de régulation, on extrait d'un réseau complet de droites un sous-ensemble de droites équiréparties, de façon à avoir une couverture homogène du plan avec un minimum de droites (et donc de facteurs).

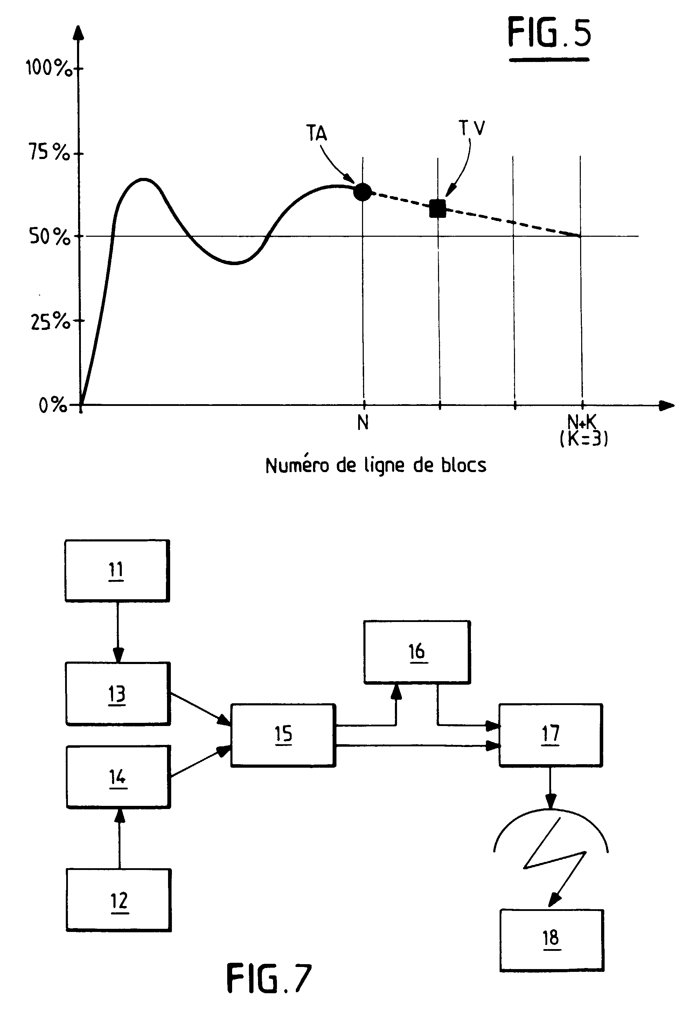

Le calcul du facteur optimal F s'effectue à partir du principe général suivant illustré sur la figure 5 :

- pour un taux de remplissage TA de la mémoire FIFO 2 lors du traitement par l'unité de régulation 6 de la ligne de blocs N, on va déterminer un taux TV souhaité pour l'implémentation N + 1 ;
- on vise à cet effet le retour à l'équilibre dans la mémoire FIFO de sortie (à savoir 50 % de remplissage) au bout de K lignes de blocs, K étant un paramètre de réglage de l'algorithme de régulation ;
- plus K est petit :

  * plus la régulation est rigide
  * plus le taux de compression est uniforme d'une ligne de blocs à l'autre
  * plus les fluctuations de qualité image le long de la trace du satellite sont rapides ;

- plus K est grand :

  * plus le taux de remplissage de la mémoire FIFO est susceptible de fluctuer
  * plus les fluctuations de qualité image le long de la trace du satellite sont lentes ;

- il y a donc un compromis à trouver entre la taille de la mémoire FIFO et l'homogénéité de la qualité image (donc la valeur de K).

A partir du taux TV, on déduit le nombre de bits alloué à la ligne de blocs N noté Nb(N).

A partir de Nb(N) et de l'estimateur calculé H(N), on déduit le facteur F(N) à appliquer à l'aide du réseau de droites moyennes de prédiction de la figure 4.

On constate en outre par simulation, que pour certains types d'images les droites moyennes sont systématiquement optimistes (ou pessimistes) vis-à-vis du nombre de bits produit. On introduit donc avantageusement dans la boucle de régulation précédemment décrite une estimation du biais introduit par les droites moyennes. Le principe est le suivant :

- pour chaque ligne de blocs N, calculer la différence $\Delta(N)$ entre le nombre de bits effectivement produit en sortie de compression (noté Nbeff(N)) et le nombre de bits prédit Nb(N). On a : $\Delta(N)=Nbeff(N)-Nb(N)$ ;
- le biais B(M) pour la ligne de blocs M est donné par :

$$B(M) = \frac{\sum_{i=1+m}^{V+m} \Delta(M-i)}{V}$$

V étant un paramètre de réglage (valeur typique = 5) et m étant un entier dépendant de la réalisation (dans le cas du séquencement illustré dans la figure 6, m = 1);
- retrancher B(M) à Nb(M) avant détermination du facteur optimal à l'aide du réseau de droites moyennes.

Avec l'estimation de biais B(M), l'algorithme de régulation est beaucoup moins sensible au réseau de droites retenu.

On se réfère maintenant à la figure 6 qui illustre l'implémentation du dispositif de la figure 1. Le cycle de base de l'algorithme de régulation est la ligne de blocs (à savoir huit lignes dans le cas d'un décorrélateur de type DCT). On calcule donc un facteur F par ligne de blocs.

Pendant le cycle N :

- la ligne de blocs N est dans le module 8 de calcul de l'estimateur (pré-analyse) ;
- la ligne de blocs N-1 est stockée dans une mémoire tampon 10 en attendant que le module de régulation 6 calcule la consigne F(N-1) à lui appliquer ;
- la ligne de blocs N-2 est en cours de compression avec la consigne F(N-2) dans l'unité 1 ;
- la ligne de blocs N-3 comprimée est dans la mémoire FIFO 2 de sortie en attendant d'être échantillonnée par l'utilisateur.

A la fin du cycle N, l'unité de régulation 6 charge la consigne F(N-1) dans le module de quantification 4 et prélève les valeurs H(N), ainsi que le taux de remplissage TA(N-2) de la mémoire FIFO 2. Ces deux valeurs H(N) et TA(N-2) lui servent pour le calcul de F(N) dans le cycle N+1.

On a illustré sur la figure 7 une application possible pour des dispositifs de traitement d'images conformes à l'invention.

Cette application concerne le traitement d'images recueillies à partir d'un satellite par deux unités de travail référencées par 11 et 12. Ces images sont transmises pour être comprimées à deux dispositifs de traitement d'images 13 et 14 du type de celui qui vient d'être décrit.

Les images comprimées sont transmises en sortie des mémoires FIFO de ces dispositifs 13 à 14 à une même mémoire tampon 15, dans laquelle elles sont stockées avant d'être envoyées sur un enregistreur 16 ou un transpondeur 17 pour la transmission satellite-sol.

Une chaîne de traitement inverse 18 est prévue au sol pour la récupération des images.

## Revendications

1. Dispositif pour la transmission d'images relevées par un satellite comportant des moyens (17) pour l'émission de données binaires vers une station de réception (18) sur la terre et des moyens de traitement (13, 14) auxquels au moins un imageur du satellite transmet des lignes de blocs qui sont des valeurs binaires représentatives des pixels d'un nombre entier de lignes consécutives de fauchée de l'instrument de prise de vue, ces moyens de traitement (13, 14) recevant ces données à débit de données binaires fixe et transmettant en sortie aux moyens d'émission (17) des données binaires avec un débit fixe inférieur au débit en entrée des moyens de traitement, ces moyens de traitement (13, 14) comportant une unité de compression qui comprend :

   - un module de décorrélation (3);
   - un quantificateur (4) qui reçoit du module de décorrélation (3) des données décorrélées et qui les quantifie en fonction d'un paramètre de réglage du taux de compression ;
   - un module de codage (5) qui reçoit du quantificateur des données quantifiées et qui code ces données, selon un code de longueur variable ;

   les moyens de traitement comportant également :

   - une mémoire de type FIFO (2) recevant du module de codage des données codées, ladite mémoire étant reliée en sortie aux moyens d'émission ;
   - des moyens de régulation (6) qui reçoivent de la mémoire FIFO (2) une information sur son taux de remplissage et qui déterminent, en fonction de ce taux de remplissage, un paramètre (F) de réglage de taux de compression, pour le quantificateur ;

   caractérisé en ce que lesdits moyens de traitement comportent également des moyens de pré-analyse (8) des images transmises à l'unité de compression (1), ces moyens de pré-analyse (8) comportant des moyens pour déterminer, pour une ligne de blocs à traiter, un paramètre estimateur de la quantité d'informations contenue dans cette ligne de blocs, ce paramètre estimateur étant transmis aux moyens de régulation, lesdits moyens de régulation (6) comportant des moyens mémoire (6a) dans lesquels sont mémorisées :

   - d'une part, une loi de retour à l'équilibre par laquelle ils déterminent, en fonction du taux de remplissage de la mémoire FIFO (2), un nombre de bits souhaité après compression pour la ligne de blocs traitée, et
   - d'autre part, des données permettant d'associer un paramètre de réglage du taux de compression optimal à un couple de valeurs de paramètre estimateur et d'un nombre de bits souhaité après compression,

   les moyens de régulation (6) déterminant à partir de ces données, et en fonction, d'une part, d'un nombre de bits souhaité après compression déterminé à l'aide de la loi de retour à l'équilibre et, d'autre part, du paramètre estimateur, un paramètre (F) de réglage de taux de compression optimal, ce nombre de bits souhaité étant préalablement corrigé par un biais qui est une valeur moyenne des différences entre le nombre de bits souhaité déterminé pour des lignes de blocs précédemment traitées et le nombre de bits effectif occupé dans la mémoire FIFO (2) après traitement de ces lignes de blocs.

2. Dispositif de transmission d'images selon la revendication 1, caractérisé en ce que les données mémorisées dans les moyens de régulation (6) comportent un réseau (6a) de relations linéaires entre le paramètre estimateur et le nombre estimé de bits produits après compression, à paramètre de réglage de taux de compression donné.

3. Dispositif de transmission d'images selon l'une des revendications 1 ou 2, caractérisé en ce que la portion d'image traitée est la ligne de blocs et en ce que le biais B(M) pour la ligne de blocs (M) est donné par :

$$B(M) = \frac{\sum_{i=1+m}^{V+m} \Delta(M-i)}{V}$$

où V est un paramètre de réglage,
où m est un entier dépendant de la réalisation et
où $\Delta$ (M-i) est la différence, pour la ligne de blocs (M-i), du nombre de bits effectif et du nombre de bits souhaité lors du traitement de cette ligne.

4. Dispositif de transmission selon l'une des revendications précédentes, caractérisé en ce que la loi de retour- à l'équilibre mémorisée par les moyens de régulation vise un retour théorique à un taux de remplissage de 50 % de la mémoire FIFO (2) après traitement de K lignes de blocs, où K est un entier prédéterminé.

5. Dispositif de transmission d'images selon l'une des revendications précédentes, caractérisé en ce qu'il comporte une mémoire tampon (10) dans laquelle est stockée la ligne de blocs dont les moyens de pré-analyse ont déterminé le paramètre estimateur, avant que cette ligne de blocs ne soit traitée par l'unité de compression (1), pendant la détermination par les moyens de régulation (6) du facteur de réglage de taux de compression correspondant à appliquer à l'unité de compression (1).

6. Dispositif selon l'une des revendications précédentes, caractérisé en ce que le paramètre estimateur que déterminent les moyens de pré-analyse (8) est l'entropie des différences entre pixels adjacents de la portion d'image à traiter.

7. Dispositif selon l'une des revendications précédentes, caractérisé en ce que paramètre estimateur que déterminent les moyens de pré-analyse (8) est :

$$\sigma = \sum_{i} \sum_{j} |P_{i,j} - P_{i,j-1}|$$

ou $P_{i,j}$ est la valeur du pixel de coordonnées (i,j) de la portion d'image à traiter.

**Patentansprüche**

1. Vorrichtung für die Übertragung von Bildern, die von einem Satelliten aufgenommen wurden, mit Mitteln (17) zum Senden binärer Daten zu einer Empfangsstation (18) auf der Erde und Verarbeitungsmitteln (13, 14), zu denen wenigstens ein Satellitenbildgerät Blockzeilen sendet, die binäre Werte haben, welche Pixeln einer ganzzahligen Anzahl von aufeinanderfolgenden Zeilen entsprechen, die von einem Aufnahmegerät aufgenommen wurden, wobei die Verarbeitungsmittel (13, 14) die Daten mit einer festen binären Datenrate empfangen und die binären Daten am Ausgang zu Sendemitteln (17) mit einer festen Rate senden, die niedriger ist als die Eingangsrate der Verarbeitungsmittel, wobei die Verarbeitungsmittel (13, 14) eine Kompressionseinheit mit folgenden Merkmalen aufweisen:

   ein Dekorrelationsmodul (3);
   eine Quantifizierungseinrichtung (4), die von dem Dekorrelationsmodul (3) dekorrelierte Daten empfängt und diese als Funktion eines Parameters zum Einstellen des Kompressionsgrades quantifiziert;

ein Codiermodul (5), das von der Quantifizierungseinrichtung quantifizierte Daten empfängt und diese Daten gemäß eines Codes variabler Länge codiert; wobei die Verarbeitungsmittel ferner folgende Merkmale aufweisen:

einen FIFO-Speicher (2), der von dem Codiermodul codierte Daten enthält, wobei dieser Speicher an seinem Ausgang mit den Sendemitteln verbunden ist;

Einstellmittel (6), die von dem FIFO-Speicher (2) eine Information über dessen Füllgrad erhalten und als Funktion dieses Füllgrades einen Parameter (F) zum Einstellen des Kompressionsgrades für die Quantifizierungseinrichtung ermitteln;

dadurch **gekennzeichnet,** daß

die Verarbeitungsmittel ferner Voranalysemittel (8) für die zur Kompressionseinheit (1) gesendeten Bilder aufweisen, wobei diese Voranalysemittel (8) Mittel zum Bestimmten eines Paramters zum Abschätzen der in dieser Blockzeile enthaltenen Informationsmenge für eine zu verarbeitende Blockzeile aufweisen, wobei dieser Schätzparameter zu den Einstellmitteln gesendet wird;

die Einstellmittel (6) Speichermittel (6a) aufweisen, in denen folgendes gespeichert ist:

einerseits ein Gesetz für die Rückkehr zum Gleichgewicht, mit dessen Hilfe sie als Funktionen des Füllgrades des FIFO-Speichers (2) für die verarbeitete Blockzeile eine gewünschte Anzahl der Bits nach der Kompression ermitteln; und

andererseits Daten, die eine Zuordnung eines optimalen Einstellparamters für den Kompressionsgrad zu einem Wertepaar für den Schätzparameter und eine gewünschte Anzahl der Bits nach der Kompression erlauben; die Einstellmittel (6) ausgehend von diesen Daten und als Funktion einerseits der nach der Kompression gewünschten Anzahl der Bits, die mit Hilfe des Gesetzes für die Rückkehr zum Gleichgewicht ermittelt wurde, und andererseits des Schätzparameters einen Parameter (F) zur Einstellung des optimalen Kompressionsgrades ermitteln;

wobei die gewünschte Anzahl der Bits im voraus mit einem Vorgabewert korrigiert wird, der einen Mittelwert aus den Differenzen zwischen der gewünschten Anzahl der Bits, die für die zuvor verarbeiteten Blockzeilen ermittelt wurde, und der Anzahl der Bits, die nach der Verarbeitung dieser Blockzeilen tatsächlich im FIFO-Speicher (2) vorhanden sind, entspricht.

2. Vorrichtung zum Übertragen von Bildern nach Anspruch 1, dadurch **gekennzeichnet,** daß die in den Einstellmitteln (6) gespeicherten Daten ein Netz (6a) aus linearen Beziehungen zwischen dem Schätzparameter und der geschätzten Anzahl der nach der Kompression erzeugten Bits für einen gegebenen Parameter zum Einstellen des Kompressionsgrades bilden.

3. Vorrichtung zum Übertragen von Bildern nach Anspruch 1 oder 2, dadurch **gekennzeichnet,** daß der Teil des verarbeiteten Bildes die Blockzeile ist und daß der Vorgabewert B(M) für die Blockzeile (M) gegeben ist durch:

$$B(M) = \frac{\sum_{i=1+m}^{V+m} \Delta(M-i)}{V}$$

wobei V ein Einstellparameter ist, m ist eine von der Ausführungsform abhängige ganze Zahl, und $\Delta(M-i)$ ist die Differenz der Anzahl der tatsächlichen Bits und der Anzahl der bei der Verarbeitung dieser Zeile gewünschten Bits für die Blockzeile (M-i).

4. Vorrichtung zum Übertragen von Bildern nach einem der vorangehenden Ansprüche, dadurch **gekenneichnet,** daß das Gesetz für die Rückkehr zum Gleichgewicht, das in den Einstellmitteln gespeichert ist, eine theoretische Rückführung zu einem Füllgrad des FIFO-Speichers (2) von 50 % nach der Verarbeitung von K Blockzeilen vorsieht, wobei K eine vorgegebene ganze Zahl ist.

**5.** Vorrichtung zum Übertragen von Bildern nach einem der vorangehenden Ansprüche, dadurch **gekennzeichnet**, daß sie einen Pufferspeicher (10) aufweist, in der die Blockzeile gespeichert ist, für die die Voranalysemittel den Schätzparamter bestimmt haben, wobei vorher diese Blockzeile nicht von der Kompressionseinheit (1) verarbeitet wird, während die Einstellmittel (6) den entsprechenden Faktor zum Einstellen des Kompressionsgrades ermitteln, der an die Kompressionseinheit angelegt wird.

**6.** Vorrichtung zum Übertragen von Bildern nach einem der vorangehenden Ansprüche, dadurch **gekennzeichnet,** daß der Schätzparamter, den die Voranalysemittel (8) bestimmen, die Entropie der Differenzen zwischen benachbarten Pixel des zu verarbeitenden Teiles Bildes ist.

**7.** Vorrichtung zum Übertragen von Bildern nach einem der vorangehenden Ansprüche, dadurch **gekennzeichnet,** daß der Schätzparameter, den die Voranalysemittel (8) bestimmen, gegeben ist durch:

$$O = \sum_i \sum_j \left| P_{i,j} - P_{i,j-1} \right|$$

wobei $P_{i,j}$ der Wert des Pixels der Koordinaten (i, j) des zu verarbeitenden Teils des Bildes ist.

## Claims

**1.** Device for the transmission of images collected by a satellite comprising means (17) for sending binary data to a receiving station (18) on the earth and processing means (13, 14) to which at least one imager of the satellite transmits rows of blocks which are binary values representative of the pixels of an integer number of consecutive swath rows of the exposure-taking instrument, these processing means (13, 14) receiving these data at a fixed binary data bit rate and outputting binary data to the sending means (17) with a fixed bit rate which is lower than the bit rate at the input of the processing means, these processing means (13, 14) comprising a compression unit which comprises:

- a decorrelation module (3);
- a quantizer (4) which receives decorrelated data from the decorrelation module (3) and which quantizes them as a function of a parameter for adjusting the degree of compression;
- a coding module (5) which receives quantized data from the quantizer and which codes these data, according to a variable-length code;

  the processing means also comprising:

- a FIFO type memory (2) receiving coded data from the coding module, the said memory being linked at output to the sending means;
- regulating means (6) which receive from the FIFO memory (2) an item of information regarding the degree of fill thereof and which determine, as a function of this degree of fill, a degree of compression adjustment parameter (F), for the quantitizer;

characterized in that the said processing means also comprise means (8) of pre-analysis of the images transmitted to the compression unit (1), these pre-analysis means (8) comprising means for determining, for a row of blocks to be processed, an estimator parameter for estimating the quantity of information contained in this row of blocks, this estimator parameter being transmitted to the regulating means,
the said regulating means (6) comprising memory means (6a) in which are stored:

- on the one hand, a return-to-equilibrium law by which they determine, as a function of the degree of fill of the FIFO memory (2), a post-compression desired number of bits for the processed row of blocks, and
- on the other hand, data making it possible to associate a parameter for adjusting the optimal degree of compression with a pair of estimator parameter values and of a post-compression desired number of bits,

the regulating means (6) determining from these data and as a function, on the one hand, of a post-compression desired number of bits determined with the aid of the return-to-equilibrium law and, on the other hand, of the estimator parameter, an optimal degree of compression adjustment parameter (F),
this desired number of bits being corrected beforehand by a bias which is a mean value of the differences between the desired number of bits determined for previously processed rows of blocks and the actual number of bits occupied in the FIFO memory (2) after these rows of blocks have been processed.

2. Device for the transmission of images according to Claim 1, characterized in that the data stored in the regulating means (6) comprise a net (6a) of linear relations between the estimator parameter and the estimated number of bits produced after compression, for a given degree of compression adjustment parameter.

3. Device for the transmission of images according to one of Claims 1 and 2, characterized in that the image portion processed is the row of blocks and in that the bias B(M) for the row of blocks (M) is given by:

$$B(M) = \frac{\sum_{i=1+m}^{V+m} \Delta(M-i)}{V}$$

where V is an adjustment parameter,
where m is an integer dependent on the embodiment and
$\Delta$ (M-i) is the difference, for the row of blocks (M-i), between the actual number of bits and the desired number of bits when processing this row.

4. Transmission device according to one of the preceding claims, characterized in that the return-to-equilibrium law stored by the regulating means aims at a theoretical return to a degree of fill of 50% of the FIFO memory (2) after K rows of blocks have been processed, where K is a predetermined integer.

5. Device for the transmission of images according to one of the preceding claims, characterized in that it comprises a buffer memory (10) in which is stored the row of blocks of which the pre-analysis means have determined the estimator parameter, before this row of blocks is processed by the compression unit (1), during the determination by the regulating means (6) of the corresponding degree of compression adjustment factor to be applied to the compression unit (1).

6. Device according to one of the preceding claims, characterized in that the estimator parameter determined by the pre-analysis means (8) is the entropy of the differences between adjacent pixels of the image portion to be processed.

7. Device according to one of the preceding claims, characterized in that the estimator parameter determined by the pre-analysis means (8) is:

$$\sigma = \sum_i \sum_j |P_{i,j} - P_{i,j-1}|$$

where $P_{i,j}$ is the value of the pixel with coordinates (i,j) of the image portion to be processed.

## FIG.1

## FIG.6

FIG. 2

FIG.3

FIG.4

FIG.5

100%

75%

TA        T V

50%

25%

0%

N        N+K
          (K=3)

Numéro de ligne de blocs

11

13

14

12

15

16

17

18

FIG.7